# EUROPEAN PATENT SPECIFICATION

(11) **EP 1 210 225 B1**
(45) Date of publication and mention of the grant of the patent: **19.11.2003**
(21) Application number: 99945088.5
(22) Date of filing: 19.08.1999
(51) Int. Cl.: B29D 30/48, B60C 15/04

(54) **TIRE BEAD WITH LOCKED END WIRE AND ITS METHOD OF MANUFACTURE**
REIFENWULST MIT GEKLEMMTEN DRAHTENDEN UND VERFAHREN ZU DESSEN HERSTELLUNG
TALON DE PNEU AVEC EXTREMITE VERROUILLEE ET SON PROCEDE DE FABRICATION

(43) Date of publication of application: 05.06.2002
(73) Proprietor: THE GOODYEAR TIRE & RUBBER COMPANY, Akron, Ohio 44316-0001 (US)
(72) Inventor: GOLIGHTLY, Ralph, Wayne, Gadsden, AL 35901 (US)
(74) Representative: Kutsch, Bernd
(86) International application number: US9918783
(87) International publication number: WO01014130

(56) References cited:
- EP-A- 0 303 514
- DE-A- 3 613 349
- US-A- 1 491 626

## Description

### TECHNICAL FIELD

The present invention generally relates to wire fabrics and structures. More particularly, this invention relates to tire beads and their methods of manufacture.

### BACKGROUND OF THE INVENTION

A tire bead is that part of a tire which anchors the tire onto a wheel's rim. It is essentially an annular tensile member or inextensible hoop. Every tire has two such beads which are located within the rubber or elastomeric matrix which makes up the radially inner-most circumference on each side of the tire.

In the usual procedure for manufacturing tire beads, the ends of individual wires, the exteriors of which are often rubber coated, are fed into a tire bead making machine. Machines of this type are old and well known in the tire building art.

Typical bead-making machines of this type are disclosed in U. S. Patents Nos. 1,913,336, 2,902,083 and 5,385,621. These machines comprise a rotating drum about which the bead wire is wrapped a predetermined number of turns, dependent upon the strength and/or cross-sectional area of the tire bead desired. Standard equipment on such machines includes the means for automatically introducing the leading end of the wire into a gripper on the drum, intermittently operated means for rotating the drum, a stacking device which moves the incoming wire so as to control and build-up the cross-sectional shape of the resulting tire bead, and a knife to sever the incoming wire at the end of each building cycle. During the pause in the rotation of the drum, the finished tire bead is ejected laterally from the drum.

One deficiency of conventional tire bead making machines is the problem associated with how to deal with the cut ends of the resulting tire bead. The springback nature of the wire ends can result in their coming loose and causing wire misalignments which can result in an unacceptable number of manufacturing interruptions in order to restring and realign the wires. At present, string wrapping or stapling the cut end wire portion of a bead is the only way to control end wire movement during the curing process. For example, U. S. Patent No. 4,938,437 provides a variety of staple-like and string wrapping methods for holding the bead assembly together and constraining the cut wire end.

Thus, despite the prior art, there still exists a need for more efficient tire bead manufacturing processes that can resolve the above-described difficulties.

### OBJECTS OF THE INVENTION

It is an object of the present invention to provide a more efficient tire bead manufacturing process as defined in one or more of the appended claims and as such, having the capability of accomplishing one or more of the following subsidiary objects.

An object of the present invention is to provide a method of constructing a tire bead by wrapping the final turn of the bead wire so that the cut end is constrained between the two previous wraps of the wire and does not require string wrap or stapling.

Another object of the present invention is provide a new and improved type of tire bead where the wire cut end is constrained to preserve the integrity of the bead core geometry during its removal from the bead making machine and throughout the tire manufacturing process.

Other objects and advantages of this invention will become readily apparent as the invention is better understood by reference to the accompanying drawings and the detailed description that follows.

### SUMMARY OF THE INVENTION

The present invention is generally directed to satisfying the needs set forth above and the problems identified with prior tire bead manufacturing processes. Prior problems, associated with the springback of the cut wire end and associated interruptions in the bead core manufacturing process and the quality of finished tires are resolved by the present invention.

In accordance with one embodiment of the present invention, the foregoing need can be satisfied by providing a method of making a tire bead core characterized by the steps of winding a length of wire into a coil with at least one radially outermost layer having a side-by-side relationship where each successive winding of the wire is placed adjacent to the previous winding except for the final two windings where the next to last winding is placed with a uniform gap relative to the previous winding and where the final winding and its cut end cross over the next to last winding and are pressed into the gap and are thus constrained by the previous two windings of the bead wire.

Preferably the last winding crosses over the next to last winding at a position of from 210 to 270 degrees rotation of the last windings. The underlying windings of the bead wire can wound in side-by-side relation and in any number of successive superimposed layers of predetermined widths to provide a tire bead core of any cross sectional area and shape including hexagonal. The bead wire is typically coated with an elastomeric material, such as green rubber, prior to winding the bead core.

### BRIEF DESCRIPTION OF THE DRAWINGS

The structure, operation, and advantages of the invention will become further apparent upon consideration of the following description taken in conjunction with the accompanying drawings.
**FIGURE 1** is a side view of a bead made according to the present invention;
**FIGURE 2** is a cross-sectional view of the bead of **FIGURE 1** taken along line 2-2 on **FIGURE 1;**
**FIGURE 3** is a cross-sectional view of the bead of **FIGURE** **1** taken along line 3-3 on **FIGURE 1;**
**FIGURE 4** is an unwrapped view of the radially outermost layer of the bead of **FIGURE 1** showing the cross-over of the bead wire at a location of between 180 degrees and 270 degrees of the final winding.

### DEFINITIONS

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

### DETAILED DESCRIPTION OF THE PREFERRED EMBODIMENT

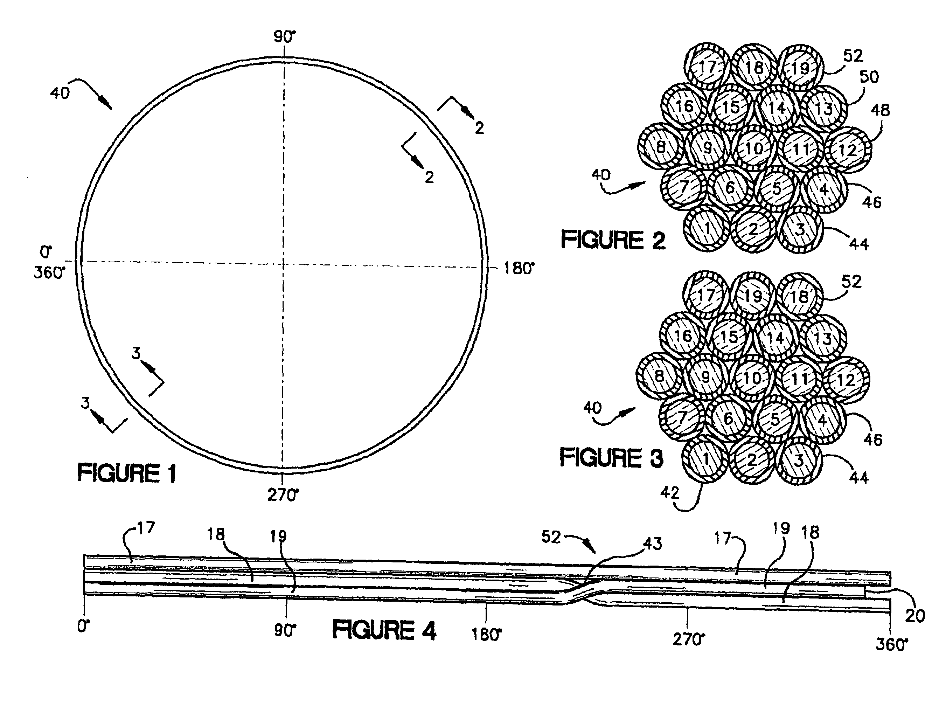

Referring now to the drawings which show an embodiment of the present invention, there is shown in **FIGURE 1** a side view of a bead core **40** made according to the present invention. The present invention is concerned primarily with the process of winding a bead wire **42** covered with an elastomeric coating, typically of a green rubber, whereby the radially outermost row constrains the cut end **20** of the bead wire **42** in a manner that is generally applicable to a variety of bead configurations made from multiple windings of a single bead wire.

As an example and not by way of limitation, **FIGURES 1-4** show an embodiment of the bead core **40** of the present invention with a hexagonal cross-sectional shape. As shown by **FIGURES 2 and 3** the hexagonal shape is formed from 19 convolutions or windings **1-19** of a bead wire **42** in five layers. While five rows are shown, it will be obvious to one skilled in the art that the number of rows and the number of windings within each row can be varied to achieve a great variety of cross sectional shapes.

Note that **FIGURE 1** is provided with angular coordinate references at 0, 90, 180, 270 and 360 degrees. These angular coordinates refer to the angle of rotation of the bead that occurs while on the bead making-machine as the bead wire **42** is wound into a bead of the desired number of windings and cross sectional shape. The angular coordinates define the relationship between the side view of **FIGURE 1** and the unwrapped view of the radially outermost layer **30** of the bead provided by **FIGURE 4.**

Referring to **FIGURES 2** and **3,** there is shown cross-sectional views of the bead core **40** at the locations indicated by the section marks 2-2 and 3-3 respectively. The order of winding the bead wire **42** is enumerated for each of the windings **1-19.** In the winding of a bead core, the wire **42** is generally placed adjacent to the previous winding in a side-by-side relationship and as necessary above or radially outward of the previous winding when a new row is started. For example, as shown in both **FIGURES 2** and **3,** the second winding **2** of the bead wire **42** is placed next to the first winding **1** and is followed by the third winding **3** forming the first or radially innermost row of the bead core **40.** The fourth winding **4** of the bead wire **42** is placed radially outward and adjacent to the previous winding 3 to begin the second row **46.** This pattern is continued to make a bead core of rows **44,46,48,50** and **52** of the desired cross-sectional shape or of any number of rows and windings with the exception of the final or radially outermost row **52.**

The pattern of winding the radially outermost row **52** is varied to provide the means to constrain the cut wire end. This variation begins between 210 and 270 degrees rotation of the next to last winding **18** where the bead wire **42** is placed with a relatively uniform gap **43** relative to the previous winding **17.** As shown on **FIGURE 3,** the final winding **19** of the wire crosses over the previous winding **18** and is placed between and is constrained by the two previous windings **17,18** respectively. In comparison, **FIGURE 2,** being a cross-sectional view taken at an angle of less than 210 degrees shows a sequential side-by-side relationship of the final three windings **17,18,19** of the bead wire. To simplify the comparison of **FIGURES 2** and **3** these cross sectional views are oriented with the radially outermost row **52** shown at the top.

Referring to **FIGURE 4,** the radially outermost rows **52** of the bead core **40** is represented in an unwound view providing a detailed examination of the region where the last winding **19** of the bead wire **42** crosses over the previous winding **18.** The angular coordinates shown on **FIGURE 4** define the geometric relationship of this linear view to the actual circular form of the bead core **40** shown by **FIGURE 1.** As shown by **FIGURE 4,** the next to last winding **18** of the bead wire is placed adjacent to the previous winding **17** from 0 degrees to approximately 225 degrees. From approximately 225 to 360 degrees the winding **18** continues to run parallel to the previous winding **17** but is placed with a gap that is approximately equal to the diameter of the bead wire **42.** The final winding of the bead wire **19** continues from 0 degrees to approximately 225 degrees where it crosses over the previous winding **18** and is pressed into the gap **43** between windings **17** and **18** with its cut end **20** placed at 360 degrees. The cut end **20** is thus constrained between the two previous windings of the bead wire **17,18** and the completed bead core can be removed from the bead-making machine. The cut end **20** is also held into place by the green rubber layer surrounding each winding.

## Claims

1. A method of making a tire bead core (40) comprising the steps of
- winding a length of bead wire (42) into a plurality of successive, superimposed rows (44,46,48,50,52) with each of the rows having a plurality of windings (1,2,3...19); **characterized by**
- winding an outermost row (52) with two successive windings (17,18) just prior to the final winding (19) being spaced from each other to form gap (43);
- winding the final winding (19) and its cut end (20) to cross over the top of the next to last winding (18); and
- pressing a section of the final winding (19) and its cut end (20) into the gap so that the final winding is constrained therein by the two previous windings (17,18).

2. The method of making the tire bead core (40) as recited in claim 1, including the steps of:
- beginning the gap (43) at a first position of from 210 degrees to 270 degrees from the beginning of the winding (18);
- crossing the final winding (19) and its cut end (20) over the next to last winding (18); and
- pressing the last winding (19) and its cut end (20) into the gap beginning at the first position and ending substantially 360 degrees from the beginning of the final winding (19) so that the cut end is located close to a second position 360 degrees from the beginning of the final winding (19).

3. The method of making a tire bead core (40) as recited in claim 2, including the step of selecting the bead wire (42) with an elastomeric coating to help constrain the final winding (19) and its cut end (20) in the gap (43) between the two previous windings (17,18).

4. The method of making a tire bead core (40) as recited in claim 2, including the step of winding the bead wire (42) so that the windings (1,2,3...19) are laid in side by side relation and in successive superposed layers of predetermined widths to provide a tire bead core (40) of predetermined cross-sectional shape and area.

5. The method of making a tire bead core (40) as recited in claim 4, including the step of winding the bead wire (42) into a hexagonal cross-sectional shape.

6. A tire bead core (40) formed from a length of bead wire (42) wound into a plurality of successive superimposed rows (44,46,48,50,52), each of the rows having a plurality of windings (1,2,3...19), **characterized by**:
- an outermost row (52) having two successive windings (17,18) just prior to the final winding (19) being spaced from each other to form a gap (43);
- the final winding (19) and its cut end (20) crossing over the top of the next to last winding (18) and pressed into the gap (43) and constrained therein by the two previous windings (17,18).

7. The tire bead core (40) as recited in claim 6 **characterized in that** the gap (43) between the next to the two previous windings (17,18) begins at a first position of from 210 degrees to 270 degrees from the beginning of the winding (18); and **in that** the final winding (19) crosses over the next to last winding (18) and is pressed into the gap (43) from the first position where the gap begins so that the cut end is located close to a second position 360 degrees from the beginning of the final winding (19).

8. The tire bead core (40) as recited in claim 7 **characterized in that** the bead wire (42) has an elastomeric coating to help constrain the final winding (19) and its cut end (20) in the gap (43) between the two previous windings (17,18).

9. The tire bead core (40) as recited in claim 7 **characterized in that** the windings (1,2,3...19) of the bead wire (42) are in side-by-side relation and in successive superimposed layers of predetermined widths to provide a tire bead core (40) of predetermined cross-sectional shape.

10. The tire bead core (40) as recited in claim 9 **characterized in that** the bead core (40) is of a hexagonal cross-sectional shape.

11. A tire having bead cores as recited in any of claims 6-10.

## Patentansprüche

1. Verfahren zum Herstellen eines Reifenwulstkerns (40), das die folgenden Schritte umfasst:
- Wickeln einer Länge eines Wulstdrahts (42) in mehrere aufeinander folgende, übereinandergelegte Reihen (44, 46, 48, 50, 52), wovon jede mehrere Windungen (1, 2, 3, ..., 19) aufweist; **gekennzeichnet durch**:
- Wickeln einer äußersten Reihe (52) in der Weise, dass zwei aufeinander folgende Windungen (17, 18) direkt vor der letzten Windung (19) voneinander beabstandet sind, um einen Spalt (43) zu bilden;
- Wickeln der letzten Windung (19) mit ihrem abgeschnittenen Ende (20) in der Weise, dass sie die Oberseite der vorletzten Windung (18) überkreuzt; und
- Drücken eines Abschnitts der letzten Windung (19) mit ihrem abgeschnittenen Ende (20) in den Spalt, derart, dass die letzte Windung darin **durch** die zwei vorhergehenden Windungen (17, 18) eingezwängt ist.

2. Verfahren zum Herstellen des Reifenwulstkerns (40) nach Anspruch 1, das die folgenden Schritte umfasst:
- Beginnen des Spalts (43) an einer ersten Stelle, die zwischen 210 Grad und 270 Grad vom Beginn der Windung ( 18) entfernt ist;
- Führen der letzten Windung ( 19) mit ihrem abgeschnittenen Ende (20) über die vorletzte Windung (18); und
- Drücken der letzten Windung ( 19) mit ihrem abgeschnittenen Ende (20) in den Spalt, wobei an der ersten Stelle begonnen wird und im Wesentlichen bei 360 Grad vom Beginn der letzten Windung ( 19) geendet wird, derart, dass sich das abgeschnittene Ende nahe an einer zweiten Stelle befindet, die um 360 Grad vom Beginn der letzten Windung (19) entfernt ist.

3. Verfahren zum Herstellen eines Reifenwulstkerns (40) nach Anspruch 2, das den Schritt des Wählens eines Wulstdrahts (42) mit elastomerer Beschichtung umfasst, um das Einzwängen der letzten Windung ( 19) mit ihrem abgeschnittenen Ende (20) in den Spalt (43) zwischen den zwei vorhergehenden Windungen (17, 18) zu unterstützen.

4. Verfahren zum Herstellen eines Reifenwulstkerns (40) nach Anspruch 2, das den Schritt des Wickelns des Wulstdrahts (42) in der Weise, dass die Windungen (1, 2, 3, ..., 19) nebeneinander und in aufeinander folgenden, übereinandergelegten Schichten vorgegebener Breiten gelegt werden, umfasst, um einen Reifenwulstkern (40) mit vorgegebener Querschnittsform und -fläche zu schaffen.

5. Verfahren zum Herstellen eines Reifenwulstkerns (40) nach Anspruch 4, das den Schritt des Wickelns des Wulstdrahts (42) zu einer sechseckigen Querschnittsform umfasst.

6. Reifenwulstkern (40), der aus einer Länge eines Wulstdrahts (42) gebildet und in mehreren aufeinander folgenden, übereinandergelegten Reihen (44, 46, 48, 50, 52), wovon jede mehrere Windungen (1, 2, 3, ..., 19) aufweist, gewickelt ist, **dadurch gekennzeichnet, dass**:
- in einer äußerste Reihe (52) zwei aufeinander folgende Windungen (17, 18) direkt vor der letzten Windung (19) voneinander beabstandet sind, um einen Spalt (43) zu bilden; und
- die letzte Windung (19) und ihr abgeschnittenes Ende (20) die Oberseite der vorletzten Windung (18) überkreuzen, in den Spalt (43) gedrückt sind und darin durch die zwei vorhergehenden Windungen (17, 18) eingezwängt sind.

7. Reifenwulstkern (40) nach Anspruch 6, **dadurch gekennzeichnet, dass** der Spalt (43) zwischen den zwei vorletzten Windungen (17, 18) an einer ersten Stelle beginnt, die zwischen 210 Grad und 270 Grad vom Beginn der Windung (18) entfernt ist; und dass die letzte Windung ( 19) die vorletzte Windung (18) überkreuzt und ab der ersten Stelle, an der der Spalt (43) beginnt, in diesen gedrückt ist, derart, dass sich das abgeschnittene Ende nahe an einer zweiten Stelle befindet, die um 360 Grad vom Beginn der letzten Windung ( 19) entfernt ist.

8. Reifenwulstkern (40) nach Anspruch 7, **dadurch gekennzeichnet, dass** der Wulstdraht (42) eine elastomere Beschichtung aufweist, die das Einzwängen der letzten Windung (19) mit ihrem abgeschnittenen Ende (20) in den Spalt (43) zwischen den zwei vorhergehenden Windungen (17, 18) unterstützt.

9. Reifenwulstkern (40) nach Anspruch 7, **dadurch gekennzeichnet, dass** die Windungen (1, 2, 3, ..., 19) des Wulstdrahts (42) nebeneinander und in aufeinander folgenden, übereinandergelegten Schichten vorgegebener Breiten liegen, um einen Reifenwulstkern (40) mit vorgegebener Querschnittsform zu schaffen.

10. Reifenwulstkern (40) nach Anspruch 9, **dadurch gekennzeichnet, dass** der Wulstkern (40) eine sechseckige Querschnittsform besitzt.

11. Reifen welcher Reifenwulstkerne aufweist nach irgendeinem der Ansprüche 6-10.

## Revendications

1. Procédé de fabrication d'une tringle de talon (40) pour bandage pneumatique, comprenant les étapes consistant à :
- enrouler une longueur de fil d'acier de talon (42) en plusieurs rangées superposées successives (44, 46, 48, 50, 52), chaque rangée possédant plusieurs enroulements (1, 2, 3... 19) ;
**caractérisé par** le fait de
- enrouler une rangée (52) située le plus à l'extérieur, deux enroulements successifs (17, 18) juste avant l'enroulement final (19) étant espacés l'un de l'autre pour former un espace libre (43) ;
- enrouler l'enroulement final (19) et son extrémité découpée (20) pour passer par-dessus le sommet de l'avant-dernier enroulement (18) ; et
- enfoncer par pression une section de l'enroulement final (19) et son extrémité découpée (20) dans l'espace libre de telle sorte que l'enroulement final y est retenu par les deux enroulements précédents (17, 18).

2. Procédé de fabrication de la tringle de talon (40) pour bandage pneumatique comme indiqué dans la revendication 1, englobant les étapes consistant à :
- entamer l'espace libre (43) à une première position formant un angle de 210 degrés à 270 degrés par rapport au début de l'enroulement (18) ;
- faire passer l'enroulement final (19) et son extrémité découpée (20) par-dessus l'avant-dernier enroulement (18) ; et
- enfoncer par pression le dernier enroulement (19) et son extrémité découpée (20) dans l'espace libre en commençant à la première position et en terminant en formant essentiellement un angle de 360 degrés par rapport au début de l'enroulement final (19) de telle sorte que l'extrémité découpée est disposée à proximité d'une deuxième position formant un angle de 360 degrés par rapport au début de l'enroulement final (19).

3. Procédé de fabrication d'une tringle de talon (40) pour bandage pneumatique comme indiqué à la revendication 2, englobant les étapes consistant à sélectionner un fil d'acier de talon (42) enrobé d'un élastomère pour favoriser la retenue de l'enroulement final (19) et de l'extrémité découpée (20) de ce dernier dans l'espace libre (43) entre les deux enroulements précédents (17, 18).

4. Procédé de fabrication d'une tringle de talon (40) pour bandage pneumatique comme indiqué à la revendication 2, englobant l'étape consistant à enrouler le fil d'acier de talon (42) de telle sorte que les enroulements (1, 2, 3... 19) sont posés en une relation côte à côte et dans des couches successives superposées de largeur prédéterminée pour obtenir une tringle de talon de bandage pneumatique (40) possédant une superficie de section et une configuration en coupe transversale prédéterminées.

5. Procédé de fabrication d'une tringle de talon (40) pour bandage pneumatique comme indiqué à la revendication 2, englobant l'étape consistant à enrouler le fil d'acier de talon (42) pour obtenir une configuration hexagonale en coupe transversale.

6. Tringle de talon (40) pour bandage pneumatique formée à partir d'une longueur de fil d'acier de talon (42) enroulée en plusieurs rangées superposées successives (44, 46, 48, 50, 52), chacune des rangées possédant plusieurs enroulements (1, 2, 3... 19),
**caractérisée par le fait que** :
- la rangée (52) située le plus à l'extérieur possède deux enroulements successifs (17, 18), juste avant l'enroulement final (19), espacés l'un de l'autre pour former un espace libre (43) ;
- l'enroulement final (19) et son extrémité découpée (20) passant par-dessus le sommet de l'avant-dernier enroulement (18) sont enfoncés par pression dans l'espace libre (43) pour y être retenus par les deux enroulements précédents (17, 18).

7. Tringle de talon (40) pour bandage pneumatique comme indiqué dans la revendication 6, **caractérisée en ce qu'**on entame l'espace libre (43), entre les deux avant-derniers enroulements (17, 18), à une première position formant un angle de 210 degrés à 270 degrés par rapport au début de l'enroulement (18) ; et **en ce que** l'enroulement final (19) passe par-dessus l'avant-dernier enroulement (18) et est enfoncé par pression dans l'espace libre (43) depuis la première position où commence l'espace libre de telle sorte que l'extrémité découpée est disposée à proximité d'une deuxième position formant un angle de 360 degrés par rapport au début de l'enroulement final (19).

8. Tringle de talon (40) pour bandage pneumatique comme indiqué dans la revendication 7, **caractérisée en ce que** le fil d'acier de talon (42) est enrobé d'un élastomère pour favoriser la retenue de l'enroulement final (19) et de l'extrémité découpée (20) de ce dernier dans l'espace libre (43) entre les deux enroulements précédents (17, 18).

9. Tringle de talon (40) pour bandage pneumatique comme indiqué dans la revendication 7, **caractérisée en ce que** les enroulements (1, 2, 3... 19) du fil d'acier de talon (42) sont déposés en une relation côte à côte et dans des couches successives superposées de largeurs prédéterminées pour obtenir une tringle de talon de bandage pneumatique (40) possédant une configuration en coupe transversale prédéterminée.

10. Tringle de talon (40) pour bandage pneumatique comme indiqué à la revendication 9, **caractérisée en ce que** la tringle de talon (40) possède une configuration hexagonale en coupe transversale.

11. Pneumatique ayant des tringles de talon selon l'une quelconque des revendications 6-10.
